# EUROPÄISCHE PATENTSCHRIFT

(11) **EP 3 057 824 B1**
(45) Veröffentlichungstag und Bekanntmachung des Hinweises auf die Patenterteilung: **19.07.2017**
(21) Anmeldenummer: 14781907.2
(22) Anmeldetag: 10.10.2014
(51) Int. Cl.: F16C 19/54, B60N 2/14

(54) **DREHVORRICHTUNG FÜR EINEN FAHRZEUGSITZ UND FAHRZEUGSITZ**
ROTATIONAL DEVICE FOR A VEHICLE SEAT, AND VEHICLE SEAT
MÉCANISME DE ROTATION POUR UN SIÈGE DE VÉHICULE ET SIÈGE DE VÉHICULE

(30) Priorität: 17.10.2013 DE 102013221095; 28.01.2014 DE 102014201454
(43) Veröffentlichungstag der Anmeldung: 24.08.2016
(73) Patentinhaber: Adient Luxembourg Holding S.à r.l., 2453 Luxembourg (LU)
(72) Erfinder: ADAM, Joerg, 55758 Oberreidenbach (DE)
(86) Internationale Anmeldenummer: PCT/EP2014/071739
(87) Internationale Veröffentlichungsnummer: WO 2015/055523

(56) Entgegenhaltungen:
- WO-A1-93/18318
- FR-A1- 2 486 787
- GB-A- 2 396 102
- US-A- 6 021 989
- US-A1- 2010 007 165

## Beschreibung

Die Erfindung betrifft eine Drehvorrichtung für einen Fahrzeugsitz mit den Merkmalen des Oberbegriffs des Anspruchs 1. Die Erfindung betrifft auch einen Fahrzeugsitz mit den Merkmalen des Anspruchs 13.

### Stand der Technik

Aus der DE 10 2011 012 973 B3 sind eine gattungsgemäße Drehvorrichtung sowie ein gattungsgemäßer Fahrzeugsitz bekannt. Der Fahrzeugsitz umfasst ein Basisbauteil und einen relativ zu dem Basisbauteil um eine Drehachse drehbaren Sitzteilträger. Der Sitzteilträger ist dabei mittels zweier Wälzlager und eines Gleitlagers um eine Drehachse drehbar gelagert. Durch im Fahrbetrieb auftretende Anregungen oder Schwingungen kann es zu kurzzeitigen Verformungen des Sitzteilträgers kommen, wodurch Kugeln der Wälzlager kurzzeitig den Kontakt zu dem Sitzteilträger verlieren. Dadurch können störende Geräusche entstehen.

Aus der DE 10 2010 053 802 B3 sind ebenfalls eine gattungsgemäße Drehvorrichtung sowie ein gattungsgemäßer Fahrzeugsitz bekannt.

Aus der WO 93/18318 A1 ist eine Schwenkeinrichtung und insbesondere einen Mechanismus, der das Schwenken eines Kraftfahrzeugsitzes bewirken kann, bekannt, wobei der Fahrzeugsitz sich bei Drehung zugleich nach vorn bewegt, um einen im Sitz befindlichen Passagier von einer Stellung, in welcher der Sitz normalerweise angeordnet ist, in eine Position zu bewegen, wo der Sitz sich an der Türschwelle oder dahinter präsentiert, während gleichzeitig das Kollidieren mit einer Tür, einem Türpfosten oder dergleichen vermieden wird.

In der GB 2 396 102 A ist ein Flurförderzeug bekannt, das einen um eine annähernd vertikale Schwenkachse zwischen einer der Vorwärtsfahrtrichtung zugeordneten Normalposition und einer der Rückwärtsfahrtrichtung zugeordneten Schrägposition schwenkbaren Fahrersitz aufweist. Der Fahrersitz ist an einer schwenkbaren Lagerplatte befestigt, die an einer an dem Fahrzeugkörper befestigten Stützplatte angeordnet ist und im Uhrzeigersinn um maximal 15 bis 25 Grad schwenkbar ist.

Die US 6 021 989 A offenbart eine Drehvorrichtung eines Fahrzeugsitzes, die nicht während des Drehens gelöst wird, und die eine obere Platte in einer vorbestimmten Position zuverlässig hält.

Aus der US 2010/007165 A1 sind ebenfalls eine gattungsgemäße Drehvorrichtung sowie ein gattungsgemäßer Fahrzeugsitz bekannt.

### Aufgabe

Der Erfindung liegt die Aufgabe zu Grunde, eine Drehvorrichtung sowie einen Fahrzeugsitz der eingangs genannten Art zu verbessern, insbesondere eine Vorspannkraft, mit welcher der Sitzteilträger relativ zu dem Basisbauteil verspannt ist, zu erhöhen, ohne bei einer Drehung des Sitzteilträgers auftretende Reibungskräfte zu erhöhen, und dadurch störende Geräusche zu vermindern.

### Lösung

Diese Aufgabe wird erfindungsgemäß durch eine Drehvorrichtung mit den Merkmalen des Anspruches 1 gelöst. Vorteilhafte Ausgestaltungen, welche einzeln oder in Kombination miteinander eingesetzt werden können, sind Gegenstand der Unteransprüche.

Eine gattungsgemäße Drehvorrichtung für einen Fahrzeugsitz umfasst ein Basisbauteil und einen relativ zu dem Basisbauteil um eine Drehachse drehbaren Sitzteilträger. Das Basisbauteil ist dabei vorzugsweise plattenartig ausgebildet und dient zur Befestigung des Fahrzeugsitzes in dem Fahrzeug. An dem Sitzteilträger, welcher erfindungsgemäss plattenartig ausgebildet ist, ist eine Sitzeinheit befestigbar.

Erfindungsgemäß sind mindestens drei Wälzlager zur drehbaren Lagerung des Sitzteilträgers vorgesehen.

Dadurch wird ein gleichmäßigere Druckverteilung und Kraftverteilung auf die Wälzlager erreicht und störende Geräusche durch Vibrationen sind vermieden. Der Sitzteilträger ist plattenartig ausgestaltet, wobei ein erstes Wälzlager auf einer Flachseite des Sitzteilträgers angeordnet ist, und ein zweites Wälzlager sowie ein drittes Wälzlager an der gegenüberliegenden Flachseite des Sitzteilträgers angeordnet sind. Dabei sind die Wälzlager jeweils in einer Kreisbahn angeordnet, wobei das erste Wälzlager in einem ersten Lagerabstand kreisförmig um die Drehachse herum verläuft, und das zweite Wälzlager in einem zweiten Lagerabstand kreisförmig um die Drehachse herum verläuft, und das dritte Wälzlager in einem dritten Lagerabstand kreisförmig um die Drehachse herum verläuft. Die Lagerabstände definieren jeweils einen Radius der entsprechenden Kreisbahn.

Gemäß einer vorteilhaften Ausgestaltung der Erfindung ist der erste Lagerabstand kleiner als der zweite Lagerabstand und größer als der dritte Lagerabstand. In Radialrichtung bezüglich der Drehachse liegt das erste Wälzlager somit zwischen dem zweiten und dem dritten Wälzlager. Eine über das erste Wälzlager eingeleitete Kraft verteilt sich somit auf das zweite und das dritte Wälzlager.

Zur Sicherung des Sitzteilträgers ist vorteilhaft eine Verriegelungsscheibe vorgesehen, welche fest mit dem Basisbauteil verbunden ist. Die Verriegelungsscheibe ist ebenfalls vorzugsweise plattenartig ausgebildet. Vorzugsweise ist die Verriegelungsscheibe (im Folgenden auch als Verriegelungsplatte bezeichnet) mit dem Basisbauteil verschraubt.

Wenn der Sitzteilträger zwischen dem Basisbauteil und der Verriegelungsscheibe angeordnet ist, so ist der Sitzteilträger gesichert und eine Bewegung des Sitzteilträgers in Richtung der Drehachse ist verhindert.

Vorzugsweise ist genau ein Wälzlager zwischen der Verriegelungsplatte und dem Sitzteilträger angeordnet. Vorzugsweise sind genau zwei Wälzlager zwischen dem Basisbauteil und dem Sitzteilträger angeordnet.

Gemäß einer vorteilhaften Ausgestaltung der Erfindung sind die Wälzlager als Kugellager ausgeführt und weisen Kugeln auf, welche in kreisförmig ausgestalteten Kugelbahnen laufen.

Gemäß einer vorteilhaften Ausgestaltung der Erfindung ist ein U-förmig ausgebildeter Fanghaken vorgesehen, um ein Auseinanderbewegen des Sitzteilträgers von dem Basisbauteil zu verhindern.

Gemäß einer vorteilhaften Ausgestaltung der Erfindung liegt der Fanghaken auf dem Sitzteilträger auf und ist mit diesem fest verbunden.

Gemäß einer weiteren vorteilhaften Ausgestaltung der Erfindung ist der Fanghaken in Fahrtrichtung x betrachtet hinter dem Sitzteilträger angeordnet.

Gemäß einer vorteilhaften Ausgestaltung der Erfindung ist der Fanghaken mit dem Sitzteilträger verschraubt.

Die Aufgabe wird auch durch einen Fahrzeugsitz mit den Merkmalen des Anspruches 13 gelöst, welcher mindestens eine erfindungsgemäße Drehvorrichtung umfasst.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:

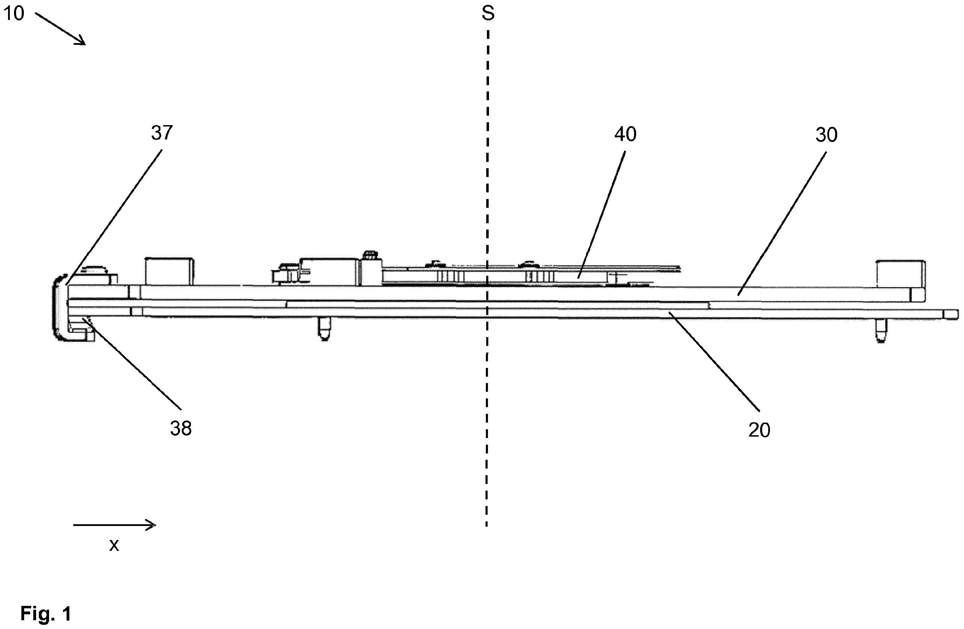

- Fig. 1:: eine Seitenansicht einer Drehvorrichtung,

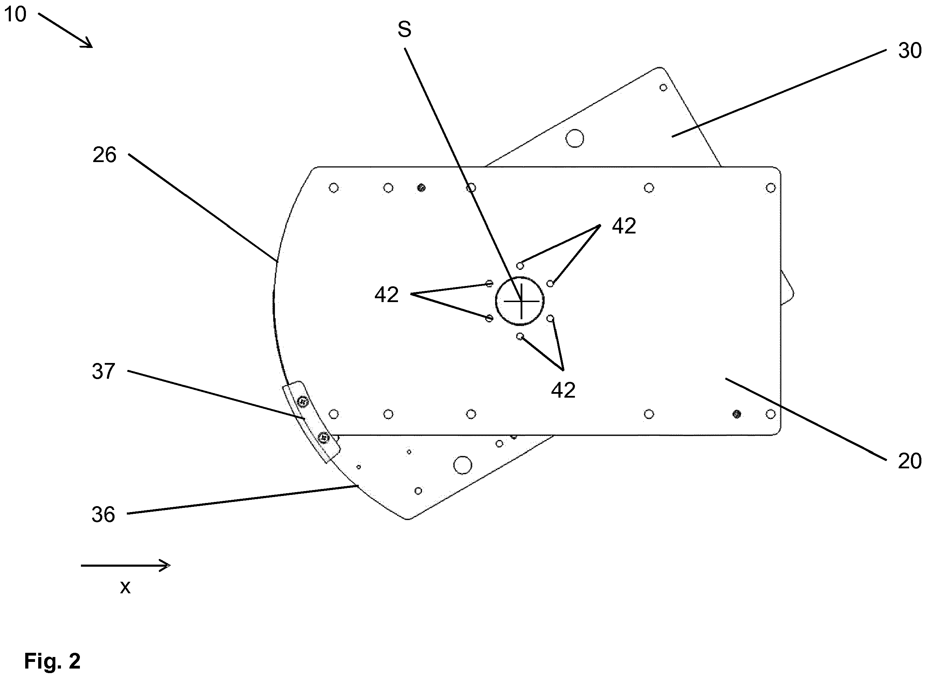

- Fig. 2:: eine Unteransicht der Drehvorrichtung nach Fig. 1 in einer gedrehten Position,

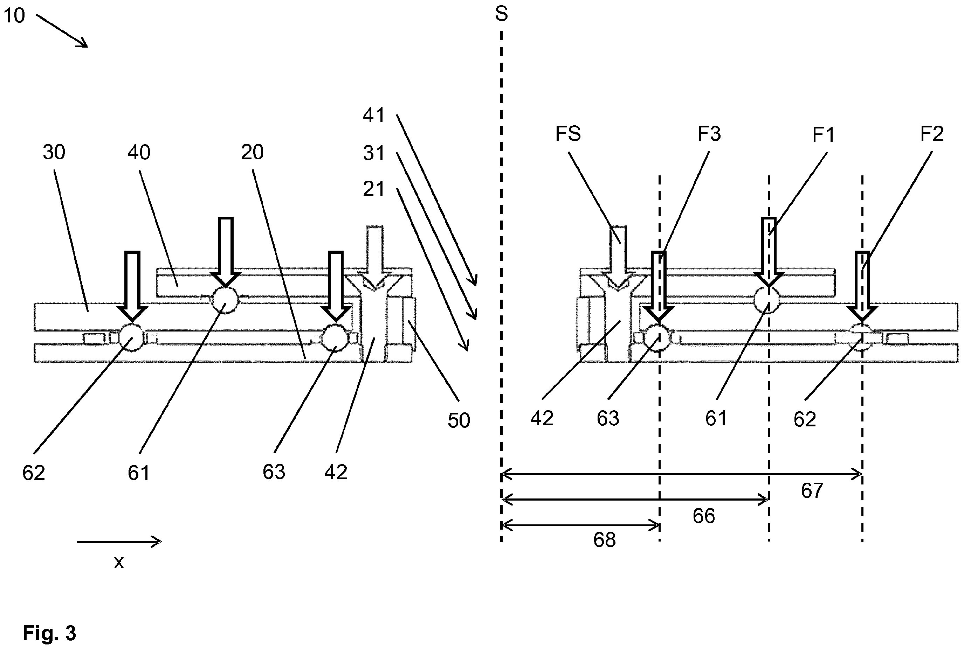

- Fig. 3:: einen Schnitt durch einen zentralen Bereich der Drehvorrichtung nach Fig. 1 und

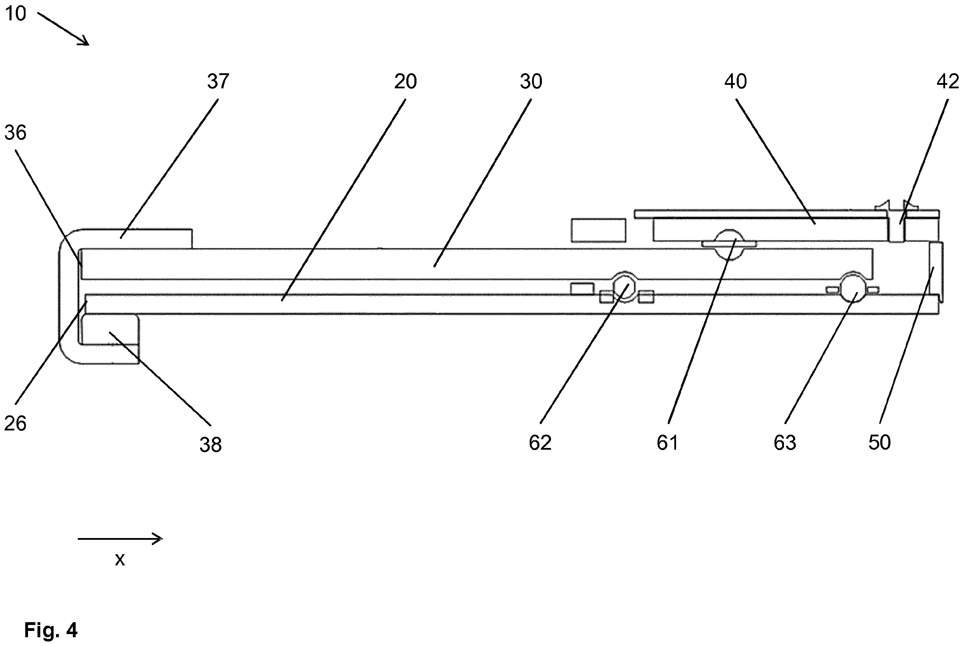

- Fig. 4:: einen Schnitt durch einen seitlichen Bereich der Drehvorrichtung nach Fig. 1.

Eine Drehvorrichtung 10 ist in einem hier nicht dargestellten Fahrzeug, vorliegend in einem Nutzfahrzeug, angeordnet und trägt eine hier nicht dargestellte Sitzeinheit. Die Sitzeinheit und die Drehvorrichtung 10 bilden einen Fahrzeugsitz. Die Drehvorrichtung 10 ist dabei an einer Struktur des Fahrzeugs oder an einer podestartigen Konsole befestigt, vorliegend verschraubt. Die Konsole ist in diesem Fall an dem Boden einer Fahrgastzelle des Fahrzeugs befestigt.

Die Anordnung des Fahrzeugsitzes und der Drehvorrichtung 10 innerhalb des Fahrzeugs und dessen gewöhnliche Fahrtrichtung x definieren die im Folgenden verwendeten Richtungsangaben. Dabei wird eine senkrecht zum Erdboden orientierte Richtung, im Folgenden als Vertikalrichtung bezeichnet, und eine Richtung senkrecht zur Vertikalrichtung und senkrecht zur Fahrtrichtung x wird im Folgenden als Querrichtung bezeichnet.

Die Drehvorrichtung 10 weist ein annähernd rechteckförmiges plattenartiges Basisbauteil 20 auf. Eine in Fahrtrichtung vorne gelegene Vorderseite sowie seitlich gelegene Seiten des Basisbauteils 20 sind annähernd gerade ausgeführt. Eine in Fahrtrichtung x hinten gelegene Fangseite 26 des Basisbauteils 20 ist in Form eines Kreisbogens ausgestaltet. Mittels nicht dargestellter Schrauben ist das Basisbauteil 20 mit der Struktur des Fahrzeugs verschraubt.

Die Drehvorrichtung 10 weist ebenfalls einen annähernd rechteckförmigen plattenartigen Sitzteilträger 30 annähernd gleicher Größe und Form wie das Basisbauteil 20 auf. Der Sitzteilträger 30 ist um eine in Vertikalrichtung verlaufende Drehachse S drehbar auf dem Basisbauteil 20 gelagert. Eine in Fahrtrichtung x vorne gelegene Vorderseite sowie seitlich gelegene Seiten des Sitzteilträgers 30 sind annähernd gerade ausgeführt. Eine in Fahrtrichtung hinten gelegene Hinterseite 36 des Sitzteilträgers 30 ist in Form eines Kreisbogens ausgestaltet. Mittels nicht dargestellter Schrauben ist der Sitzteilträger 30 mit der Sitzeinheit des Fahrzeugsitzes verschraubt.

Ein geometrischer Mittelpunkt des Kreisbogens der Fangseite 26 des Basisbauteils 20 liegt auf der Drehachse S. Ein geometrischer Mittelpunkt des Kreisbogens der Hinterseite 36 des Sitzteilträgers 30 liegt ebenfalls auf der Drehachse S. Wenn sich die Drehvorrichtung 10 in Grundposition befindet, ist der Sitzteilträger 30 in Fahrrichtung x ausgerichtet und die Fangseite 26 des Basisbauteils 20 fluchtet mit der Hinterseite 36 des Sitzteilträgers 30.

In Vertikalrichtung oberhalb des Sitzteilträgers 30 ist eine kreisrunde Verriegelungsscheibe 40 angeordnet und fest mit dem Basisbauteil 20 verbunden. Der Sitzteilträger 30 liegt somit in Vertikalrichtung zwischen dem Basisbauteil 20 und der Verriegelungsscheibe 40.

Das Basisbauteil 20 weist eine erste Durchgangsöffnung 21 auf, welche vorliegend als kreisrunde Bohrung ausgeführt ist. Der Sitzteilträger 30 weist eine zweite Durchgangsöffnung 31 auf, welche vorliegend als kreisrunde Bohrung ausgeführt ist. Die Verriegelungsscheibe 40 weist eine dritte Durchgangsöffnung 41 auf, welche vorliegend als kreisrunde Bohrung ausgeführt ist.

Die zweite Durchgangsöffnung 31 weist einen größeren Innendurchmesser auf als die erste Durchgangsöffnung 21. Die dritte Durchgangsöffnung 41 weist einen etwa gleich großen Innendurchmesser wie die erste Durchgangsöffnung 21 auf. Die Drehachse S verläuft zentral durch die erste Durchgangsöffnung 21, die zweite Durchgangsöffnung 31 und die dritte Durchgangsöffnung 41.

An dem Sitzteilträger 30 ist eine hier nicht dargestellte Verriegelungseinrichtung angeordnet, welche einen zweiarmigen Verriegelungshebel umfasst, welcher um eine parallel zu der Drehachse S angeordnete Verriegelungsachse drehbar gelagert ist. An einem ersten Arm des Verriegelungshebels ist ein Vorsprung angeordnet, der durch eine an dem freien Ende des ersten Arms angreifende vorgespannte Zugfeder in eine als Nut ausgebildete Ausnehmung der Verriegelungsscheibe 40 kraftschlüssig und formschlüssig eingreifend belastet ist und bei Eingriff in die Nut den Sitzteilträger 30 in seiner momentanen Drehposition verriegelt. Durch manuelle Beaufschlagung des freien Endes des zweiten Arms des Verriegelungshebels entgegen der Kraft der Zugfeder wird der Vorsprung aus der Nut herausbewegt und die Verriegelung des Sitzteilträgers 30 aufgehoben, wodurch der Sitzteilträger 30 relativ zu dem Basisbauteil um die Drehachse S drehbar ist.

Ein Abstützring 50 ist mit einer unteren Stirnseite auf dem Basisbauteil 20 in Auflage und durchragt koaxial zu der Drehachse S die zweite Durchgangsöffnung 31. Auf einer oberen Stirnseite des Abstützrings 50 liegt die Verriegelungsscheibe 40 auf. Der Außendurchmesser des Abstützrings 50 ist größer als der Innendurchmesser der ersten Durchgangsöffnung 21 und größer als der Innendurchmesser der dritten Durchgangsöffnung 41. Der Innendurchmesser des Abstützrings 50 ist geringfügig kleiner als der Innendurchmesser der ersten Durchgangsöffnung 21 und geringfügig kleiner als der Innendurchmesser der dritten Durchgangsöffnung 41.

Der Abstützring 50 weist vorliegend an seiner an dem Basisbauteil 20 anliegenden unteren Stirnseite einen hervorstehenden Ringansatz auf, der zur exakten Positionierung des Abstützrings 50 in die erste Durchgangsöffnung 21 des Basisbauteils 20 hineinragt. Der Abstützring 50 kann auch an seiner an der Verriegelungsscheibe 40 anliegenden oberen Stirnseite einen hervorstehenden Ringansatz aufweisen, der zur exakten Positionierung des Abstützrings 50 in die dritte Durchgangsöffnung 41 der Verriegelungsscheibe 40 hineinragt.

Mittels mehrerer, vorliegend sechs, Lagerschrauben 42 ist die Verriegelungsscheibe 40 an dem Basisbauteil 20 befestigt. Die Lagerschrauben 42 durchragen dafür vorgesehene Durchgangsbohrungen in der Verriegelungsscheibe 40 und sind in Gewindebohrungen des Basisbauteils 20 eingeschraubt.

Die Lagerschrauben 42 sind auf einer Umfangslinie eines Kreises angeordnet, dessen Mittelpunkt auf der Drehachse S liegt, und sind gleichmäßig auf der Umfangslinie des Kreises verteilt. Die Lagerschrauben 42 sind somit im gleichen Abstand zu der Drehachse S angeordnet, wobei dieser Abstand größer als der Außenradius des Abstützrings 50 aber kleiner als der Innenradius der zweiten Durchgangsöffnung 31 ist. Die Lagerschrauben 42 befinden sich also in Radialrichtung bezüglich der Drehachse S zwischen dem Abstützring 50 und dem Sitzteilträger 30.

Ein erstes Wälzlager 61 ist in Vertikalrichtung zwischen der Verriegelungsscheibe 40 und dem Sitzteilträger 30 angeordnet. Das erste Wälzlager 61 verläuft kreisförmig um die Drehachse S herum und ist in Radialrichtung in einem ersten Lagerabstand 66 zu der Drehachse S angeordnet.

Ein zweites Wälzlager 62 ist in Vertikalrichtung zwischen dem Sitzteilträger 30 und dem Basisbauteil 20 angeordnet. Das zweite Wälzlager 62 verläuft kreisförmig um die Drehachse S herum und ist in Radialrichtung in einem zweiten Lagerabstand 67 zu der Drehachse S angeordnet.

Ein drittes Wälzlager 63 ist in Vertikalrichtung zwischen dem Sitzteilträger 30 und dem Basisbauteil 20 angeordnet. Das dritte Wälzlager 63 verläuft kreisförmig um die Drehachse S herum und ist in Radialrichtung in einem dritten Lagerabstand 68 zu der Drehachse S angeordnet.

Der zweite Lagerabstand 67 ist größer als der erste Lagerabstand 66, welcher größer ist als der dritte Lagerabstand 68. Der dritte Lagerabstand 68 ist dabei auch größer als der Innenradius der zweiten Durchgangsöffnung 31.

Mittels der Wälzlager 61, 62, 63, welche vorliegend als Kugellager ausgeführt sind, ist der Sitzteilträger 30 zwischen dem Basisbauteil 20 und der Verriegelungsscheibe 40 abgestützt und um die Drehachse S relativ zu dem Basisbauteil 20 und der Verriegelungsscheibe 40 drehbar gelagert. Dazu weisen die Wälzlager 61, 62, 63 geeignete Kugellaufbahnen und Kugeln auf.

Durch Festdrehen der Lagerschrauben 42 mit einem Anzugsmoment üben diese eine Anzugskraft FS aus, welche die Verriegelungsscheibe 40 und das Basisbauteil 20 zueinander zieht und somit die Verriegelungsscheibe 40 gegen das Basisbauteil 20 verspannt.

Bedingt durch die Anzugskraft FS der Lagerschrauben 42 drückt die Verriegelungsplatte 40 mit einer ersten Lagerkraft F1 auf das erste Wälzlager 61, welches seinerseits mit der ersten Lagerkraft F1 auf den Sitzteilträger 30 drückt.

Die Wirkrichtung der ersten Lagerkraft F1 hängt von der Ausgestaltung der Kugellaufbahnen des ersten Wälzlagers 61 ab. Vorliegend wirkt die erste Lagerkraft F1 in Vertikalrichtung. Die erste Lagerkraft F1 kann aber auch eine Komponente in Vertikalrichtung und eine Komponente in Radialrichtung bezüglich der Drehachse S aufweisen.

Der Sitzteilträger 30 drückt mit einer zweiten Lagerkraft F2 auf das zweite Wälzlager 62 und mit einer dritten Lagerkraft F3 auf das dritte Wälzlager 63. Das zweite Wälzlager 62 drückt seinerseits mit der zweiten Lagerkraft F2 auf das Basisbauteil 20 und das dritte Wälzlager 63 drückt seinerseits mit der dritten Lagerkraft F3 auf das Basisbauteil 20.

Die Wirkrichtungen der zweiten Lagerkraft F2 und der dritten Lagerkraft F3 hängen von den Ausgestaltungen der Kugellaufbahnen des zweiten Wälzlagers 62 und des dritten Wälzlagers 63 ab. Vorliegend wirken die zweite Lagerkraft F2 und die dritte Lagerkraft F3 jeweils in Vertikalrichtung. Die zweite Lagerkraft F2 sowie die dritte Lagerkraft F3 können jeweils auch eine Komponente in Vertikalrichtung und eine Komponente in Radialrichtung bezüglich der Drehachse S aufweisen.

Das Verhältnis der zweiten Lagerkraft F2 zu der dritten Lagerkraft F3 ist durch entsprechende Wahl des ersten Lagerabstandes 66 im Verhältnis zu dem zweiten Lagerabstand 67 und zu dem dritten Lagerabstand 68 wählbar.

Insbesondere ist das Verhältnis der in Vertikalrichtung wirkenden Komponente der zweiten Lagerkraft F2 zu der in Vertikalrichtung wirkenden Komponente der dritten Lagerkraft F3 durch entsprechende Wahl des ersten Lagerabstandes 66 im Verhältnis zu dem zweiten Lagerabstand 67 und zu dem dritten Lagerabstand 68 wählbar.

Durch eine Verkleinerung der Differenz des ersten Lagerabstandes 66 zu dem zweiten Lagerabstand 67, bei gleichzeitiger Vergrößerung der Differenz des ersten Lagerabstandes 66 zu dem dritten Lagerabstand 68, wird die in Vertikalrichtung wirkenden Komponente der zweiten Lagerkraft F2 erhöht, und die in Vertikalrichtung wirkende Komponente der dritten Lagerkraft F3 wird verringert. Durch eine Verkleinerung der Differenz des ersten Lagerabstandes 66 zu dem dritten Lagerabstand 68, bei gleichzeitiger Vergrößerung der Differenz des ersten Lagerabstandes 66 zu dem zweiten Lagerabstand 67, wird die in Vertikalrichtung wirkenden Komponente der zweiten Lagerkraft F2 verringert, und die in Vertikalrichtung wirkende Komponente der dritten Lagerkraft F3 wird vergrößert.

Der erste Lagerabstand 66 ist vorliegend im Verhältnis zu dem zweiten Lagerabstand 67 und zu dem dritten Lagerabstand 68 derart gewählt, dass die in Vertikalrichtung wirkende Komponente der zweiten Lagerkraft F2 und auch die in Vertikalrichtung wirkende Komponente der dritten Lagerkraft F3 stets eine ausreichende Größe aufweisen. Dadurch wird verhindert, dass durch auf die Drehvorrichtung 10 einwirkende Vibrationen oder Schwingungen der Sitzteilträger 30 in Vertikalrichtung derart ausgelenkt wird oder sich derart verbiegt, dass Kugeln des zweiten Wälzlagers 62 oder Kugeln des dritten Wälzlagers 63 den Kontakt zu dem Sitzteilträger 30 und/oder zu der Basisplatte 20 verlieren.

In einem mittigen Bereich der Hinterseite 36 des Sitzteilträgers 30 ist ein Fanghaken 37 angebracht. Der Fanghaken 37 ist U-förmig ausgebildet, wobei ein oberer Schenkel des Fanghakens 37 horizontal verläuft und in Vertikalrichtung auf dem Sitzteilträger 30 aufliegt und mit diesem fest verbunden, vorliegend verschraubt ist. Alternativ kann der Fanghaken 37 auch mit dem Sitzteilträger 30 verschweißt werden.

Ein Basisabschnitt des Fanghakens 37, welcher sich in Fahrtrichtung x hinter dem Sitzteilträger 30 befindet, verläuft von dem oberen Schenkel des Fanghakens 37 in Vertikalrichtung nach unten bis unter das Basisbauteil 20. Ein unterer Schenkel des Fanghakens 37 verläuft, in der Grundposition der Drehvorrichtung 10, von dem Basisabschnitt des Fanghakens 37 in Fahrtrichtung nach vorne und parallel zu dem oberen Schenkel des Fanghakens 37 unter das Basisbauteil 20.

Der Fanghaken 37 umgreift also in Vertikalrichtung das Basisbauteil 20 und den Sitzteilträger 30. An dem unteren Schenkel des Fanghakens 37, auf der dem oberen Schenkel zugewandten Seite, ist ein Gleitelement 38 angebracht, welches vorliegend aus Kunststoff besteht. Das Gleitelement 38 befindet sich bei in Grundposition befindlicher Drehvorrichtung 10 in Vertikalrichtung zwischen dem unteren Schenkel des Fanghakens 37 und dem Basisbauteil 20 und liegt an dem Basisbauteil 20 an.

Das Gleitelement 38 verhindert bei in Grundposition befindlicher Drehvorrichtung 10 eine direkte Berührung des Fanghakens 37 mit dem Basisbauteil 20. Somit ist eine störende Geräuschbildung im Fall von Vibrationen oder Schwingungen vermieden.

Der Fanghaken 37 stellt auch eine Crashsicherung für die Drehvorrichtung 10, insbesondere für den Fall eines frontalen Crashs, dar. Im Crashfall verhindert der Fanghaken 37 ein Auseinanderreißen des Sitzteilträgers 30 und des Basisbauteils 20.

Wird der Sitzteilträger 30 nach seiner Entriegelung aus der Grundposition relativ zu dem Basisbauteil 20 um die Drehachse S gedreht, so bewegt sich der Fanghaken 37 mit dem Gleitelement 38 entlang der Fangseite 26 des Basisbauteils 20. Bis zu einer Drehung aus der Grundposition von vorliegend etwa 30° umgreift der Fanghaken 37 dabei das Basisbauteil 20. Ab einer Drehung aus der Grundposition um vorliegend mehr als 30° entfernt sich der Fanghaken 37 von dem Basisbauteil 20.

Das Gleitelement 38 weist abgeschrägte Seitenflächen auf. Beim Zurückdrehen des Sitzteilträgers 30 aus einer um mehr als 30° gedrehten Position in die Grundposition erleichtern die abgeschrägten Seitenflächen des Gleitelements 38 das Einführen des Basisbauteils 20 in den Fanghaken 37.

### Bezugszeichenliste

- 10: Drehvorrichtung
- 20: Basisbauteil
- 21: erste Durchgangsöffnung
- 26: Fangseite
- 30: Sitzteilträger
- 31: zweite Durchgangsöffnung
- 36: Hinterseite
- 37: Fanghaken
- 38: Gleitelement
- 40: Verriegelungsscheibe
- 41: dritte Durchgangsöffnung
- 42: Lagerschraube
- 50: Abstützring
- 61: erstes Wälzlager
- 62: zweites Wälzlager
- 63: drittes Wälzlager
- 66: erster Lagerabstand
- 67: zweiter Lagerabstand
- 68: dritter Lagerabstand
- FS: Anzugskraft
- F1: erste Lagerkraft
- F2: zweite Lagerkraft
- F3: dritte Lagerkraft
- S: Drehachse
- x: Fahrtrichtung

## Patentansprüche

1. Drehvorrichtung (10) für einen Fahrzeugsitz, umfassend ein Basisbauteil (20) und einen relativ zu dem Basisbauteil (20) um eine Drehachse (S) drehbaren Sitzteilträger (30), wobei der Sitzteilträger (30) plattenartig ausgestaltet ist, **dadurch gekennzeichnet, dass**
mindestens drei Wälzlager (61, 62, 63) zur drehbaren Lagerung des Sitzteilträgers (30) vorgesehen sind, wobei ein erstes Wälzlager (61) auf einer Flachseite des Sitzteilträgers (30) angeordnet ist, und ein zweites Wälzlager (62) sowie ein drittes Wälzlager (63) an der gegenüberliegenden Flachseite des Sitzteilträgers (30) angeordnet sind, wobei das erste Wälzlager (61) in einem ersten Lagerabstand (66) kreisförmig um die Drehachse (S) herum verläuft, und das zweite Wälzlager (62) in einem zweiten Lagerabstand (67) kreisförmig um die Drehachse (S) herum verläuft, und das dritte Wälzlager (63) in einem dritten Lagerabstand (68) kreisförmig um die Drehachse (S) herum verläuft.

2. Drehvorrichtung nach Anspruch 1, **dadurch gekennzeichnet, dass** der erste Lagerabstand (66) kleiner ist als der zweite Lagerabstand (67), und dass der erste Lagerabstand (66) größer ist als der dritte Lagerabstand (68).

3. Drehvorrichtung nach einem der vorstehenden Ansprüche, **dadurch gekennzeichnet, dass** eine Verriegelungsscheibe (40) fest mit dem Basisbauteil (20) verbunden ist.

4. Drehvorrichtung nach Anspruch 3, **dadurch gekennzeichnet, dass** die Verriegelungsscheibe (40) mit dem Basisbauteil (20) verschraubt ist.

5. Drehvorrichtung nach einem der Ansprüche 2 oder 3, **dadurch gekennzeichnet, dass** der Sitzteilträger (30) zwischen dem Basisbauteil (20) und der Verriegelungsscheibe (40) angeordnet ist.

6. Drehvorrichtung nach einem der Ansprüche 3 bis 5, **dadurch gekennzeichnet, dass** genau ein Wälzlager (61) zwischen der Verriegelungsscheibe (40) und dem Sitzteilträger (30) angeordnet ist.

7. Drehvorrichtung nach einem der Ansprüche 3 bis 6, **dadurch gekennzeichnet, dass** genau zwei Wälzlager (62, 63) zwischen dem Basisbauteil (20) und dem Sitzteilträger (30) angeordnet sind.

8. Drehvorrichtung nach einem der vorstehenden Ansprüche, **dadurch gekennzeichnet, dass** die Wälzlager (61, 62, 63) als Kugellager ausgeführt sind.

9. Drehvorrichtung nach einem der vorstehenden Ansprüche, **dadurch gekennzeichnet, dass** ein U-förmig ausgebildeter Fanghaken (37) vorgesehen ist.

10. Drehvorrichtung nach Anspruch 9, **dadurch gekennzeichnet, dass** der Fanghaken (37) auf dem Sitzteilträger (30) aufliegt und mit diesem fest verbunden ist.

11. Drehvorrichtung nach einem der Ansprüche 9 oder 10, **dadurch gekennzeichnet, dass** der Fanghaken (37) in Fahrtrichtung x betrachtet hinter dem Sitzteilträger (30) angeordnet ist.

12. Drehvorrichtung nach Anspruch 11, **dadurch gekennzeichnet, dass** der Fanghaken (37) mit dem Sitzteilträger (30) verschraubt ist.

13. Fahrzeugsitz, umfassend mindestens eine Drehvorrichtung (10) nach einem der vorstehenden Ansprüche.

## Claims

1. Rotational device (10) for a vehicle seat, comprising a base component (20) and a seat part support (30) which is rotatable about a rotation axis (S) relative to the base component (20), wherein the seat part support (30) is shaped like a plate, **characterized in that** at least three roller bearings (61, 62, 63) are provided for the rotatable bearing of the seat part support (30), a first roller bearing (61) being arranged on a flat face of the seat part support (30), and a second roller bearing (62) and a third roller bearing (63) being arranged on the opposite flat face of the seat part support (30), the first roller bearing (61) extending at a first bearing distance (66) circularly around the rotation axis (S), and the second roller bearing (62) extending at a second bearing distance (67) circularly around the rotation axis (S), and the third roller bearing (63) extending at a third bearing distance (68) circularly around the rotation axis (S).

2. Rotational device according to Claim 1, **characterized in that** the first bearing distance (66) is smaller than the second bearing distance (67), and **in that** the first bearing distance (66) is larger than the third bearing distance (68).

3. Rotational device according to either of the preceding claims, **characterized in that** a locking disk (40) is rigidly connected to the base component (20).

4. Rotational device according to Claim 3, **characterized in that** the locking disk (40) is screwed onto the base component (20).

5. Rotational device according to either of Claims 2 and 3, **characterized in that** the seat part support (30) is arranged between the base component (20) and the locking disk (40).

6. Rotational device according to one of Claims 3 to 5, **characterized in that** exactly one roller bearing (61) is arranged between the locking disk (40) and the seat part support (30).

7. Rotational device according to one of Claims 5 to 6, **characterized in that** exactly two roller bearings (62, 63) are arranged between the base component (20) and the seat part support (30).

8. Rotational device according to one of the preceding claims, **characterized in that** the roller bearings (61, 62, 63) are designed as ball bearings.

9. Rotational device according to one of the preceding claims, **characterized in that** a U-shaped catch hook (37) is provided.

10. Rotational device according to Claim 9, **characterized in that** the catch hook (37) bears on the seat part support (30) and is rigidly connected thereto.

11. Rotational device according to either of Claims 9 and 10, **characterized in that** the catch hook (37) is arranged behind the seat part support (30) as seen in the direction of travel x.

12. Rotational device according to Claim 11, **characterized in that** the catch hook (37) is screwed onto the seat part support (30).

13. Vehicle seat, comprising at least one rotational device (10) according to one of the preceding claims.

## Revendications

1. Mécanisme de rotation (10) pour un siège de véhicule, comprenant un composant de base (20) et un support de partie de siège (30) pouvant tourner autour d'un axe de rotation (S) par rapport au composant de base (20), le support de partie de siège (30) étant réalisé en forme de plaque, **caractérisé en ce qu'**au moins trois paliers de roulement (61, 62, 63) sont prévus pour le positionnement tournant du support de partie de siège (30), un premier palier de roulement (61) étant disposé sur un côté plat du support de partie de siège (30) et un deuxième palier de roulement (62) ainsi qu'un troisième palier de roulement (63) étant disposés au niveau du côté plat opposé du support de partie de siège (30), le premier palier de roulement (61) s'étendant, à une première distance de palier (66), en forme de cercle autour de l'axe de rotation (S) et le deuxième palier de roulement (62) s'étendant, à une deuxième distance de palier (67), en forme de cercle autour de l'axe de rotation (S) et le troisième palier de roulement (63) s'étendant, à une troisième distance de palier (68), en forme de cercle autour de l'axe de rotation (S).

2. Mécanisme de rotation selon la revendication 1, **caractérisé en ce que** la première distance de palier (66) est inférieure à la deuxième distance de palier (67) et que la première distance de palier (66) est supérieure à la troisième distance de palier (68).

3. Mécanisme de rotation selon l'une quelconque des revendications précédentes, **caractérisé en ce qu'**un disque de verrouillage (40) est relié fixement au composant de base (20).

4. Mécanisme de rotation selon la revendication 3, **caractérisé en ce que** le disque de verrouillage (40) est vissé au composant de base (20).

5. Mécanisme de rotation selon l'une quelconque des revendications 2 ou 3, **caractérisé en ce que** le support de partie de siège (30) est disposé entre le composant de base (20) et le disque de verrouillage (40).

6. Mécanisme de rotation selon l'une quelconque des revendications 3 à 5, **caractérisé en ce que** précisément un palier de roulement (61) est disposé entre le disque de verrouillage (40) et le support de partie de siège (30).

7. Mécanisme de rotation selon l'une quelconque des revendications 3 à 6, **caractérisé en ce que** précisément deux paliers de roulement (62, 63) sont disposés entre le composant de base (20) et le support de partie de siège (30).

8. Mécanisme de rotation selon l'une quelconque des revendications précédentes, **caractérisé en ce que** les paliers de roulement (61, 62, 63) sont réalisés sous la forme de paliers sphériques.

9. Mécanisme de rotation selon l'une quelconque des revendications précédentes, **caractérisé en ce qu'**un crochet d'arrêt (37) réalisé en forme de U est prévu.

10. Mécanisme de rotation selon la revendication 9, **caractérisé en ce que** le crochet d'arrêt (37) repose sur le support de partie de siège (30) et est relié fixement à lui.

11. Mécanisme de rotation selon l'une quelconque des revendications 9 ou 10, **caractérisé en ce que** le crochet d'arrêt (37) est disposé derrière le support de partie de siège (30), vu dans la direction de conduite x.

12. Mécanisme de rotation selon la revendication 11, **caractérisé en ce que** le crochet d'arrêt (37) est vissé au support de partie de siège (30).

13. Siège de véhicule, comprenant au moins un mécanisme de rotation (10) selon l'une quelconque des revendications précédentes.
